Europäisches Patentamt

European Patent Office

Office européen des brevets

(11) Publication number: **0 136 504**
**B1**

## (12) EUROPEAN PATENT SPECIFICATION

(45) Date of publication of patent specification: **30.11.88**

(21) Application number: **84109817.1**

(22) Date of filing: **17.08.84**

(51) Int. Cl.⁴: **G 11 B 23/037**

(54) **Tape cartridge.**

(30) Priority: **22.08.83 JP 130113/83 u**

(43) Date of publication of application:
**10.04.85 Bulletin 85/15**

(45) Publication of the grant of the patent:
**30.11.88 Bulletin 88/48**

(84) Designated Contracting States:
**DE GB**

(56) References cited:
**DE-A-2 952 350**
**DE-A-3 103 823**
**DE-B-1 211 461**
**GB-A-2 009 101**

(73) Proprietor: **Hitachi Maxell Ltd.**
**No 1-1-88, Ushitora Ibaraki-shi**
**Osaka-fu (JP)** ·

(72) Inventor: **Yoshimi, Maehara**
**6-206, 2-4, Nishisakaidanimachi Oharano**
**Nishigyo-ku Kyoto-shi Kyoto (JP)**
Inventor: **Mitsuhiro, Chikuwa**
**32-23, Kusada Kaide-cho**
**Muko-shi Kyoto (JP)**

(74) Representative: **Selting, Günther, Dipl.-Ing. et al**
**Deichmannhaus am Hauptbahnhof**
**D-5000 Köln 1 (DE)**

Courier Press, Leamington Spa, England.

## Description

The present invention relates to a tape reel in which an improvement is made on a surface shape of a flange of a tape reel.

Conventional tape reels, as described in GB-A-2 009 101, have an inner surface on which the tape edge contacts formed as a simple flat surface. One of the problem of the conventional tape reel is in that since the inner surface of the flange is formed as a simple flat surface, in case the recording tape which is a thin and soft strip is wound on the reel core with the one end of the tape fixed to the reel core, there tends to swell air between one tape already wound and another tape which is wound on the already wound tape (referred to as tape layer hereinafter) and then the air is prevented from being exhausted, whereby the air is enclosed between the laminatedly wound tape layers. The air enclosed between the wound tape layers is purged when the winding force of the tape is increased due to increment of the volume of the roll of the tape and the portion of the tape layer where the air purge occurs is forced to shift in a direction of width of the tape as the air is purged, then there occurs irregular winding of the tape. Such irregular winding may occur particularly during the fast winding or rewinding.

On the other hand, as described in GB-A-2 009 101, in order to reinforce the mechanical strength of the flange of the tape reel, one or more reinforcing ribs may be formed on the outer surface of the flange of the tape reel with the inner surface of the flange made flat. In this arrangement, if such ribs are merely added, there may occur difference of the thickness between the ribbed portion and non-ribbed portion. Thus, when molding the tape reel, there may occur insufficient filling of the plastic resin material in the thin portion or internal strain due to difference of the compression when the mold is cooled. In reinforcing the flange if both inner and outer surfaces of the flange are made flat, the flange must be thick and it is difficult to make the over all surfaces of the flange flat.

DE-B-1 211 461 describes a tape reel having two parallel flanges provided with through-holes and radial grooves. The through-holes are provided for saving weight and mass and the grooves act only for stabilisation because the extensive holes tend to lower the stabilisation. Because of the holes, the flanges are not continuous and not of generally equal thickness.

The object of the present invention is to enable to wind respective tapes closely preventing irregular winding of the tapes by purging out undesired air between the respective tapes.

The tape reel according to the invention has the features of Claim 1.

A preferred embodiment of the invention will be described hereafter with reference to the drawings.

Fig. 1 is a plan view showing one preferred embodiment of a recording tape cartridge having tape reels according to the present invention, with a part broken,

Fig. 2 is a cross sectional view showing one preferred embodiment of a tape reel used in the recording tape cartridge shown in Fig. 1,

Fig. 3 is a perspective view seen from the upper side of the tape reel shown in Fig. 1 with a part broken,

Fig. 4 is a perspective view seen from the lower side of the tape reel shown in Fig. 1,

Fig. 5 is a plan view showning the inside surface of the tape reel shown in Fig. 1, and

Fig. 6 is a cross sectional view taken along the lines VI-VI in Fig. 5.

Detailed Description of the Preferred Embodiment

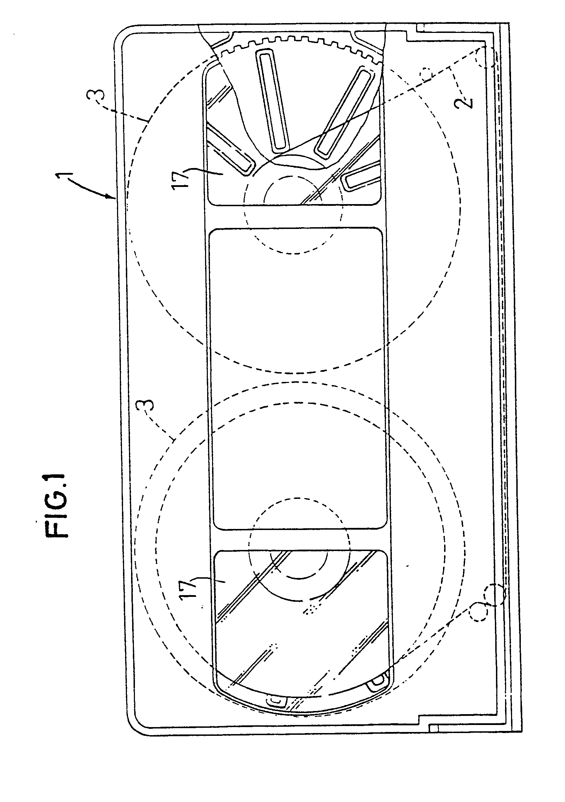

Fig. 1 illustrates a tape cartridge for video recording. In the inside of the cartridge case 1 there are rotatably provided a pair of tape reels 3 so as to have a recording tape 2 taken out from one tape reel 3 to the front portion of the cartridge case 1 and taken up onto the other tape reel 3.

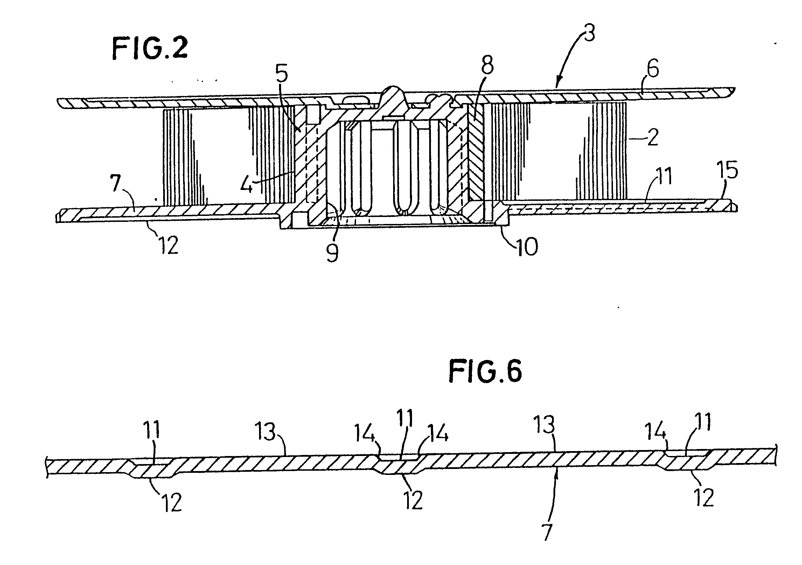

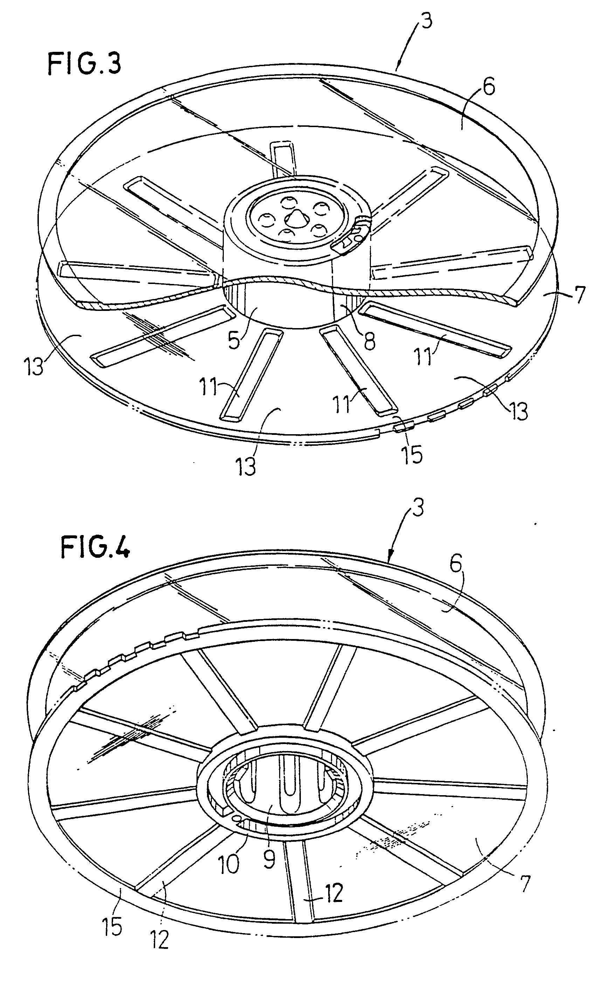

In Figs. 2 to 4, each of the tape reels 3 has flanges 6, 7 at the top and the bottom of the reel core 5 which has a cylindrical outer peripheral wall 4. The reel core 5 and the lower flange 7 are molded in one-piece using plastic resin materials, and the upper flange 6 is molded as a separate member with a transparent plastic resin material. Thereafter, it is combined by caulking at the upper end of the reel core 5 by supersonic wave welding. One end portion of the recording tape 2 is clamped to a portion of the reel core 5 using a clamp piece 8. At the central portion of the reel core 5, a drive shaft insertion hole 9 is defined so as to receive a driving shaft of a video deck (not shown) from below. A reference surface 10 in the form of an annular rib is projectingly formed on the lower end face of the reel core 5 surrounding the drive shaft insertion hole 9.

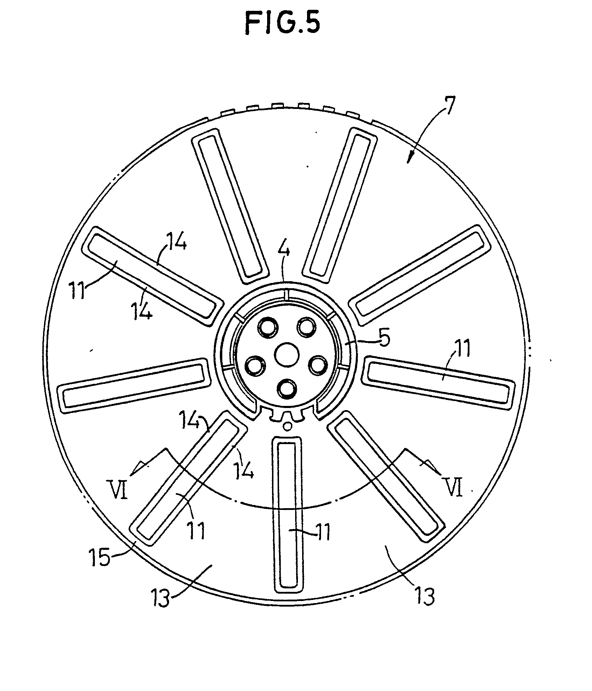

Referring to Figs. 5 and 6, a plurality of grooves 11 are defined so as to radially extend on the inside surface or the upper surface of the lower flange 7 with which the lower edge of the recording tape 2 is slidably supported. The respective grooves 11 radially extend between the inner positions near the reel core 5 and the outer positions near the outer peripheral edge of the lwer flange 7 with a predetermined angular spaces in the circumferential direction. There are formed a plurality of ribs 12 on the outer surface or the lower surface of the lower flange 7 complementarily to said grooves 11. The flat areas 13 and the bottom wall of the grooves 11 in the lower flange 7 are continued in circumferential direction with an approximately the same wall thickness. The boundary 14 between the groove 11 and the flat area 13 is formed in a smooth curved surface, so that the flow of the plastic rein material is smoothed when the tape reel is molded so as to assure a smooth contact of the recording tape edge with the surface of the lower flange 7 for preventing damage of the recording tape. The upper surface of the outer peripheral annular portion 15 of the lower flange 7 on which the

grooves 11 are not formed is formed into a flat surface continued flush with the surface of the flat area 13 over the whole circumference. The outer peripheral annular portion 15 of the lower flange 7 has also a uniform wall thickness over the whole circumference of the lower flange. The inside or upper suface of the lower flange 7 is slightly downwardly inclined with the central portion of the flange high and the outer peripheral portion low. In this arrangement, it is noted that, except for the grooved portion, the peripheral annular portion 15 on the upper surface of the lower flange 7 is so defined that each position on the same circle coaxial with the center of the flange has the same height relative to the reference surface 10.

In the illustrated embodiment, the upper flange 6 is made transparent, and the cartridge case 1 is provided on its upper surface with a transparent window 17, so that an operator can see the rotation of tape reels 3, especially the direction of rotation thereof together with the tape winding volume, by seeing a part of the groove 11 which is not concealed by the roll of the recording tape 2 from outside of the cartridge case 1. It is desirable that the reel core 5 and the lower flange 7 are molded in one-piece by plastic resin material. However, they may respectively be molded separately and then combined in one-piece by caulking by supersonic welding, or by the aid of an adhesive.

The grooves 11 may be slightly separated from the reel core 5 as illustrated, but may be continued to the reel core 5.

It is a further advantage of the present invention that since the lower flange of the tape reel is formed with a generally equal thickness by providing the radial grooves on the surface for supporting the recording tape and the projected ribs complementarily to the grooves on the opposite surface of the flange, whereby during molding of the tape reel, flow of the plastic resin can be improved so that the flange can be molded without undesired deformation, resulting in improving the geometric accuracy of the tape reel, thus the tape can be regularly wound by the help of grooves through which undesired air can be exhausted.

Also by providing the grooves and ribs on the flange, the tape reel can be made as thin as possible keeping a desired mechanical strength, so that when manufacturing the tape reel, volume of the material and the production cost can be decreased.

## Claims

1. A tape reel for use in a tape recording cartridge, comprising a cylindrical reel core (5) around which a thin tape (2) is to be wound, a top flange (6) secured to a top end of said reel core (5) and having a central portion and a peripheral portion, and a bottom flange (7) secured to a bottom end of said reel core (5) and having a central portion and having a central portion and an outer peripheral portion (15), said bottom flange (7) having an inner surface, being generally flat for slidably supporting a lower edge of said tape (2), said inner surface of said bottom flange (7) being provided with a plurality of grooves (11) at predetermined intervals in a circumferential direction, each groove (11) extending radially from a first position near said reel core (5) to a second position near an edge of said outer peripheral portion (15) and forming a corresponding projected rib (12) on an opposite outer surface of said bottom flange (7), so as to make the whole part of the flange in a generally equal thickness, characterized in that said top flange (6) and said bottom flange (7) form continuous walls and that the inner surface of said bottom flange (7) is inclined slightly downward and outward from said reel core (5) such that the central portion of said bottom flange is higher than said outer peripheral portion.

2. The tape cartridge according to Claim 1, wherein the boundary (14) between each groove (11) and the flat part (13) in the lower flange (7) is formed as a smooth curved surface.

## Patentansprüche

1. Bandspule zur Verwendung in einer Bandaufzeichnungskassette, mit einem zylindrischen Spulenkern (5) zum Aufwickeln eines dünnen Bandes (2), einem oberen Flansch (6), der an einem oberen Ende des Spulenkerns (5) befestigt ist und einen mittleren Abschnitt und einen Umfangsabschnitt aufweist, und einem unteren Flansch (7), der an einem unteren Ende des Spulenkerns (5) befestigt ist und einen mittleren Abschnitt und einen äußeren Umfangsabschnitt (15) aufweist, wobei der untere Flansch (7) eine Innenfläche aufweist, die im wesentlichen flach ist, um eine Unterkante des Bandes (2) gleitbar zu stützen, die Innenfläche des unteren Flansches (7) in vorbestimmten Intervallen in einer Umfangsrichtung mehrere Nuten (11) aufweist, jede Nut (11) sich radial von einer ersten Position in der Nähe des Spulenkerns (5) zu einer zweiten Position in der Nähe eines Randes des äußeren Umfangsabschnitts (15) erstreckt und eine entsprechende vorstehende Rippe (12) an einer gegehüberliegenden Außenfläche des unteren Flansches (7) bildet, so daß der gesamte Flanschteil mit im wesentlichen gleicher Dicke ausgebildet ist, dadurch gekennzeichnet, daß der obere Flansch (6) und der untere Flansch (7) durchgehende Wände bilden und daß die Innenfläche des unteren Flansches (7) leicht abwärts und auswärts von dem Spulenkern (5) geneigt ist, derart, daß der mittlere Abschnitt des unteren Flansches höher ist als der äußere Umfangsabschnitt.

2. Bandkassette nach Anspruch 1, bei der die Grenze (14) zwischen jeder Nut (11) und dem flachen Teil (13) in dem unteren Flansch (7) als glatte gekrümmte Fläche ausgebildet ist.

EP 0 136 504 B1

## Revendications

1. Bobine pour bande destinée à être utilisée dans une cassette de bande d'enregistrement, comprenant un moyeu de bobine cylindrique (5), autour duquel doit être enroulée une mince bande (2), une joue supérieure (6) reliée à l'extrémité supérieure du moyeu (5) et possédant une partie centrale et une partie périphérique, ainsi qu'une joue inférieure (7) reliée à l'extrémité inférieure du moyeu (5) et possédant une partie centrale et une partie phériphérique extérieure (15), la joue inférieure (7) présentant une surface interne, de forme générale plane pour supporter la bande (2) glissant sur elle par son bord inférieur, dans laquelle sont ménagées des rainures (11) avec des intervalles prédéterminés dans le sens circonférentiel, chaque rainure (11) s'étendant radialement depuis un premier point situé près du moyeu (5) de la bobine jusqu'à un second point près du bord de la partie pèriphérique extérieure (15) et chaque rainure (11) formant une nervure (12) représentant une saillie correspondante sur la surface opposée ou surface externe de la joue inférieure (7), de sorte que toute la joue possède sensiblement la même épaisseur partout, caractérisée en ce que la joue supérieure (6) et la joue inférieure (7) forment des parois continues et que la surface interne de la joue inférieure (7) est légèrement inclinée vers le bas et vers l'extérieur à partir du moyeu (5) de la bobine, de manière que la partie centrale de la joue inférieure soit plus haute que la partie périphérique extérieure.

2. Bobine pour bande en cassette selon la revendication 1, dans laquelle la limite (14) entre chaque rainure (11) et la partie plane (13) de la surface interne de la joue inférieure (7) est réalisée sous forme d'une surface à courbure douce.

4

# FIG.1

FIG.2

FIG.6

FIG.3

FIG.4

# FIG.5